# EUROPEAN PATENT SPECIFICATION

(11) **EP 3 367 197 B1**
(45) Date of publication and mention of the grant of the patent: **22.09.2021**
(21) Application number: 17158381.8
(22) Date of filing: 28.02.2017
(51) Int. Cl.: G05B 23/02

(54) **A METHOD AND SYSTEM FOR MONITORING AN INDUSTRIAL EQUIPMENT**
VERFAHREN UND SYSTEM ZUR STEUERUNG EINER INDUSTRIEAUSRÜSTUNG
PROCÉDÉ ET SYSTÈME POUR SURVEILLER UN ÉQUIPEMENT INDUSTRIEL

(43) Date of publication of application: 29.08.2018
(73) Proprietor: CODESYS Holding GmbH, 87439 Kempten (DE)
(72) Inventor: Hess, Dieter, 87439 Kempten (DE)
(74) Representative: Kretschmann, Dennis

(56) References cited:
- US-A1- 2009 319 058
- US-A1- 2016 284 128
- NAVAB N: "Industrial augmented reality (IAR): challenges in design and commercialization of killer apps", PROCEEDINGS / THE SECOND IEEE AND ACM INTERNATIONAL SYMPOSIUM ON MIXED AND AUGMENTED REALITY : 7 - 10 OCTOBER 2003, TOKYO, JAPAN, IEEE COMPUTER SOCIETY, LOS ALAMITOS, CALIF. [U.A.], 7 October 2003 (2003-10-07), pages 2-6, XP010662790, DOI: 10.1109/ISMAR.2003.1240682 ISBN: 978-0-7695-2006-3

## Description

### Field of the Invention

The invention relates to the field of industrial control, in particular to methods and systems for monitoring a device running an industrial control program, such as monitoring a tool or machinery.

### Background

Industrial control is ubiquitous in modern manufacturing. In an industrial control environment, a machine operates in accordance with control software running on an industrial controller unit. The controller unit may exchange electrical signals with the machinery as required by the control program. For instance, the controller unit may request sensor input pertaining to a machine status from the machinery, or may request sensor data from the machinery. The controller unit may process this data, and may provide instructions and parameters to the machinery that cause the machinery to perform its task, such as in a manufacturing line or in a chemical plant.

The control program running on the industrial controller unit may be configured to detect and communicate maintenance needs or malfunctions of the associated machinery. For instance, the controller unit may receive a signal from a machine or tool indicating that a tank comprising a liquid that is required for the industrial control process is empty, and needs to be refilled. Alternatively, the controller unit may receive a signal from the machinery indicating that a certain movable part of the machinery needs to be replaced.

In conventional industrial control environments, the detection of a maintenance or malfunction condition of this type usually leads to an alert or error message on a visualization screen of the machinery. Such a message can be in the form of a text message or a graphic display, and identifies the faulty component as well as possible remedies. Based on this information, an alerted user then needs to find the faulty component in the machinery on site, and restore the functionality of the machinery.

Identifying the faulty component on site can be straightforward for simple machinery comprising only relatively few components, but can be a challenging and time-consuming task for large and complex machinery, the more so for inexperienced users.

US 2016/0284128 A1 discloses systems and methods for presenting an augmented reality view of an industrial automation equipment on a mobile computing device based at least in part on a location and orientation of the mobile computing device relative to the industrial automation equipment.

Nassir Navab, "Industrial Augmented Reality (IAR): Challenges in Design and Commercialization of Killer Apps", Proceedings of the Second IEEE and ACM International Symposium on Mixed and Augmented Reality, 2003, discloses optical see-through augmentation for industrial applications, comprising an overlay of real-time process parameters and instructions for monitoring and control of automation systems.

Techniques for virtual reality display of a factory environment including the simulated operational status of the factory environment are disclosed in US 2009/0319058 A1. In some instances, the virtual reality display may be augmented by video images concurrently taken by fixed or mobile cameras.

What is needed are improved techniques for monitoring and diagnosing an industrial equipment which allow a user to quickly and reliably identify faulty components, or components requiring maintenance on site.

### Overview of the Invention

This objective is achieved with a method for monitoring an industrial equipment accord ing to independent claim 1, and a system for monitoring an industrial equipment according to independent claim 9.

The dependent claims relate to preferred embodiments.

A method for monitoring an industrial equipment according to the present invention comprises the steps of determining a position and/or an orientation of a portable graphical display device relative to an industrial equipment, and visualizing control information relating to said industrial equipment on a graphical display of said graphical display device in accordance with said determined position and/or orientation.

Said industrial equipment comprises at least one movable component that can be in a plurality of positions, and said control information comprises information on a current position of said at least one movable component.

Since the control information is displayed on the graphical display in accordance with the relative position and/or orientation of said graphical display device relative to said industrial equipment, a user of the graphical display device on site can more easily and more quickly identify the parts or components of the industrial equipment to which said control information pertains. For instance, if said control information comprises data on a component requiring maintenance or replacement, said user may more easily identify said component when inspecting said industrial equipment on site based on the information displayed on the graphical display.

Said industrial equipment may be any machinery, tool, component or other industrial device in an industrial control environment running industrial control software, or any part thereof.

Said control information may be any data or information relating to an operation or status of said industrial equipment, or parts or components thereof.

Said control information may be provided by an industrial control program running on said industrial equipment.

For instance, said control information may comprise data pertaining to a machine status, machine fault or maintenance information.

A user can carry said graphical display device with him to inspect the industrial equipment once a fault is reported by the control software, and may make use of the visualized control information to identify the faulty component.

Said position of said graphical display device may refer to a relative position in space, such as given in terms of coordinates in a Cartesian coordinate system.

Said orientation of said graphical display device relative to said industrial equipment may comprise a pose of said graphical display device relative to said industrial equipment, and/or may comprise an angle or a set of angles between said graphical display device and said industrial equipment.

A position of said visualized control information on said graphical display may change as said position and/or said orientation of said graphical display device relative to said industrial equipment changes, preferably in real time.

For instance, said control information may be displayed on said graphical display at a position that corresponds to the component to which said control information pertains within said industrial equipment, thereby permitting a user to better retrieve said component in a complex machinery.

According to the invention, said control information is visualized on said graphical display of said graphical display device in accordance with or based on model data pertaining to said industrial equipment.

Said model data may be data relating to a structure or configuration of said industrial equipment.

Said model data may be provided in any format. Said model data may amount to a three-dimensional model or reconstruction of said industrial equipment, or components or parts of said industrial equipment. Said model data may also comprise data on moving parts in said industrial equipment, and on different spatial or angular positions of said moving parts.

Said method may also comprise a step of acquiring said model data pertaining to said industrial equipment.

For instance, said model data may be acquired from said industrial equipment, or may also be pre-stored, or retrieved via a network, such as the internet.

In an embodiment, the method comprises the steps of acquiring an image of said industrial equipment by means of said graphical display device, and visualizing said image together with said control information, preferably in real time.

For instance, said control information may overlie said image of said industrial equipment on said graphical display.

In these embodiments, the user may see on the graphical display device an image of said industrial equipment together with said control information. For instance, control information pertaining to a particular component of said industrial equipment may appear at the location of said component in said image on said graphical display.

Said control information may comprise parameters relating to an operating state of said component, or may simply comprise an indication of a component that requires maintenance or replacement. As an example, a component requiring maintenance or replacement may be indicated in color or otherwise highlighted on said graphical display.

In these embodiments, said graphical display device may comprise, or may be attached to or connected to an image acquisition device.

Said image acquisition device may be an optical camera.

Said optical camera and said graphical display may be integrated in one device, for instance in the form of a portable tablet device.

In an embodiment, the method further comprises the steps of acquiring an image of said industrial equipment with said graphical display device, identifying a plurality of markers in said image, and determining said position and/or said orientation based on said identified markers.

Said markers may be characteristic features of said industrial equipment, such as characteristic edges or shapes on an outer surface of said industrial equipment.

Alternatively, said markers may be removable markers that a user may attach to said industrial equipment.

Conventional image recognition techniques may be employed to identify said markers in said acquired image, and to determine said position and/or said orientation of said graphical display device relative to said industrial equipment based on said identified markers.

Alternatively or additionally, said method may comprise the steps of sensing a distance of said graphical display device to said industrial equipment, and determining said position and/or said orientation based at least in part on said sensed distance.

In said latter embodiment, said graphical display device may comprise, or may be attached to or connected to a time-of-flight camera.

Sensing a distance between said graphical display device and said industrial equipment may allow to enhance the precision with which said position and/or said orientation of said graphical display device relative to said industrial equipment can be determined.

Other means of tracking a position and/or an orientation of said graphical display device may likewise be employed.

Said method may also comprise a step of tracking or determining a position and/or an orientation of a user relative to said graphical display of said graphical display device.

Said control information may be visualized on said graphical display in accordance with said position and/or said orientation of said user relative to said graphical display.

Tracking said position and/or said orientation of said user relative to said graphical display may enhance the accuracy with which the control information may be displayed on the graphical display, so to make sure that the control appears at the correct spatial position of the graphical display depending on the current position of the user.

In an embodiment, said industrial equipment comprises a plurality of components, wherein said control information relates to at least one component among said plurality of components, and wherein said control information is visualized in accordance with a position and/or an orientation of said graphical display device relative to said at least one component.

According to the invention, the method comprises a step of displaying model data pertaining to said industrial equipment on said graphical display in accordance with said determined position and/or orientation alongside said control information.

According to the invention, said model data comprises a two-dimensional or a three-dimensional model of at least part of said industrial equipment.

Said model data may be displayed alongside with, or as an alternative to a camera image of said industrial equipment.

Said model data may comprise information on said components of said industrial equipment, and may assist a user to retrieve a component that requires maintenance or replacement more easily and more quickly.

According to the invention, said model data is displayed on said graphical display device as seen from a direction and/or a distance which correspond to said determined position and/or orientation of said graphical display device relative to said industrial equipment.

In an embodiment, said model data may be displayed on said graphical display device as seen from a direction and/or a distance which correspond to a direction and/or distance between said graphical display device and said industrial equipment.

Said method may further comprise a step of acquiring said control information from said industrial equipment.

In particular, said graphical display device may be connected to said industrial equipment, or to a controller unit running a control program for said industrial equipment by means of a data connection.

Said control information may be any information provided by said control program and pertaining to said industrial equipment.

For instance, said control information may comprise information relating to a fault of a component among a plurality of components of said industrial equipment, and visualizing said control information may comprise visualizing said faulty component, such as highlighting said faulty component on said graphical display.

In an embodiment, said control information may comprise information relating to a current operating state of said industrial equipment, and visualizing may comprise visualizing said current operating state.

For instance, said industrial equipment may comprise movable components that can be in a plurality of positions, such as various spatial or angular positions, and said control information may comprise information on a current operating state of said industrial equipment, comprising information on a current position of said movable components.

Visualization may then take into account said current position as reported in said control information, thereby assisting a user to better identify said components on site.

The invention further relates to a computer program or to a computer program product comprising computer-readable instructions, wherein said instructions, when read on a computer, implement on said computer a method with some or all of the features described above.

The invention further relates to a system for monitoring an industrial equipment, comprising a tracking unit adapted to determine a position and/or an orientation of a portable graphical display device relative to an industrial equipment, and a display unit adapted to visualize control information relating to said industrial equipment on a graphical display of said graphical display device in accordance with said determined position and/or orientation.

Said industrial equipment comprises at least one movable component that can be in a plurality of positions, and said control information comprises information on a current position of said at least one movable component.

Said tracking unit may be adapted, in an example, to determine a position and/or an orientation of said graphical display of said graphical display device relative to a user, in particular relative to said eyes of the user, looking at said graphical display device.

For instance, said tracking unit may comprise a camera unit tracking a position and/or an orientation and/or a viewing direction of said eyes of said user relative to said graphical display.

Said display unit may then be adapted to visualize said control information relating to said industrial control device on said graphical display of said graphical display device in accordance with said determined position and/or orientation of said graphical display relative to said user.

As explained above, tracking the position of (the eyes of) the user may allow to enhance the spatial accuracy with which said control information may be displayed on said graphical display, so that it appears at the correct position as seen from the current spatial position and/or orientation of said user.

Said tracking unit may be implemented in hardware or in software, or by a combination of hardware and software.

Similarly, said display unit may be implemented in hardware or software, or by a combination of hardware or software.

In an embodiment said system may comprise said graphical display device.

In particular, said graphical display device may comprise said tracking unit and/or said display unit.

Said system may be adapted to perform a method with some or all of the features described above.

In an embodiment, said display unit is adapted to visualize an image of said industrial equipment together with said control information.

In an embodiment, said system further comprises an image acquisition unit adapted to acquire an image of said industrial equipment, in particular a camera image.

Said display unit may be adapted to visualize said image of said industrial equipment together with said control information, preferably in real time.

Said control information preferably overlies said image of said industrial equipment.

Said image acquisition unit may be implemented in hardware or software, or as a combination of hardware and software.

In an embodiment, said graphical display device comprises said image acquisition unit, or is attached to or connected to said image acquisition unit.

In an embodiment, said image acquisition unit comprises an optical camera.

Alternatively or additionally, said image acquisition unit may comprise a time-of-flight camera.

In an embodiment, said display unit may be adapted to visualize said control information based on or in accordance with model data pertaining to said industrial control device.

In an example, said system comprises a model data acquisition unit adapted to acquire said model data.

For instance, said model data may be acquired from said industrial equipment, or from a database connected to said model data acquisition unit via a network, such as via the internet.

Said model data acquisition unit may be implemented in hardware or software, or as a combination of hardware and software.

In an embodiment, said display unit may be adapted to display model data pertaining to said industrial equipment on said graphical display in accordance with said determined position and/or orientation, alongside said control information.

Said system may further comprise a control data acquisition unit adapted to acquire said control information from said industrial equipment.

In particular, said control data acquisition unit may be adapted to acquire said control information from an industrial controller unit running an industrial control program for said industrial equipment.

Said control data acquisition unit may be implemented in hardware or software, or as a combination of hardware and software.

### Brief Description of the Drawings

The features and numerous advantages of the method and system according to the present invention will be best apparent from a description of preferred embodiments in conjunction with the appended Figures, in which:
- Fig. 1: is a schematic illustration of a control environment in which a method and system according to the present invention may be employed;
- Fig. 2: is a detailed schematic view of a visualization according to an embodiment of the invention; and
- Fig. 3: is a flow diagram illustrating an embodiment of a method according to the invention.

### Description of Embodiments

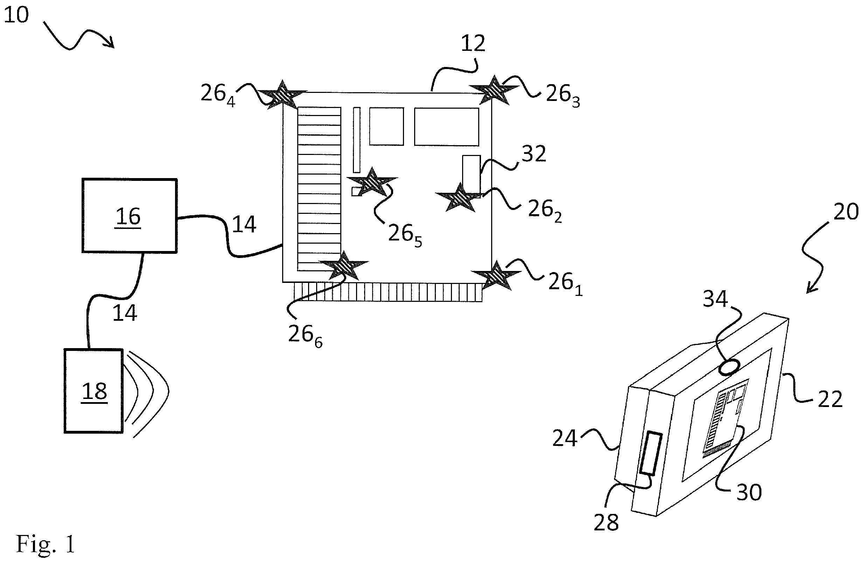

Fig. 1 illustrates a control environment 10 that represents an example of how the method and system according to the present invention may be practiced.

The control environment 10 comprises an industrial equipment 12, such as a machine adapted to perform a dedicated task in a fabrication line (not shown). The industrial equipment 12 is connected via a control network 14 to an industrial controller unit 16. In other embodiments, the industrial controller unit 16 may be integrated into the industrial equipment 12.

The industrial controller unit 16 may run an industrial control software program that controls the functionalities of the industrial equipment 12. For instance, the industrial control unit 16 may send commands to the industrial equipment 12 via the control network 14 in accordance with the industrial control program, and may request sensor data from the industrial equipment 12 via the control network 14 as directed by the industrial control program. The industrial control program may be designed and edited in a pro-graming environment (not shown) connected to the industrial controller unit 16 via the control network 14, and may be loaded onto the industrial controller unit 16 in the form of machine code or ladder logic instructions.

The control environment 10 further comprises a sender unit 18, which is connected to the industrial equipment 12 and/or the industrial controller unit 16 via the control network 14. The sender unit 18 may receive control information from the industrial equipment 12 and/or the industrial controller unit 16, and may send it out wirelessly, or via a cable connection.

The control environment 10 further comprises a portable graphical display device 20. The graphical display device 20 may comprise a graphical display 22 on a front-side end, and an optical camera 24 on a back-side end of the graphical display device 20. For instance, the graphical display device 20 may be a tablet computer equipped with a graphical display 22 and an optical camera 24.

The graphical display device 20 may comprise a tracking unit and a display unit as software modules running on a processor of the graphical display device 20.

By means of the optical camera 24, the graphical display device 20 acquires an optical image of the industrial equipment 12 when a user points the optical camera 24 in the direction of the industrial equipment 12. Based on the acquired image of the industrial equipment 12, the tracking unit incorporated into the graphical display device 20 may determine a position and/or an orientation of the graphical display device 20 relative to the industrial equipment 12 in space.

Pre-defined markers 26₁ to 26₆ may be positioned on an outer surface of the industrial equipment 12 to assist the graphical display device 20 in determining its position and/or its orientation relative to the industrial equipment 12. The markers 26₁ to 26₆ may be prominent features on an outer surface of the industrial equipment 12, which can be recognized from the image acquired by the graphical display device 20 by means of standard 3D image recognition techniques and compared to model data of the industrial equipment 12.

Alternatively, the markers 26₁ to 26₆ may be colored or patterned stickers that can be attached to an outer surface of the industrial equipment 12 at pre-determined positions.

Fig. 1 shows six markers 26₁ to 26₆ distributed over the surface of the industrial equipment 12. However, a smaller or larger number of markers can be employed, depending on the circumstances. In general, using standard 3D image reconstruction techniques, the graphical display device 20 may reliably determine its position and/or orientation in space relatively to said industrial equipment 12 once three or four markers 26₁ to 26₆ are visible and can be identified from the acquired image.

The graphical display device 20 further comprises a receiver unit 28 that allows the graphical display device 20 to receive information or data from the sender unit 18, such as wirelessly or via a cable connection. For instance, said sender unit 18 and said receiver unit 28 may communicate using the Bluetooth communication protocol.

The data received from the sender unit 18 may comprise two-dimensional or three-dimensional model data of the industrial equipment 12, including a breakdown of the industrial equipment 12 into functional components. The graphical display device 12 may display this data as a model image 30 on its graphical display 22.

Based on the model data and on the determined position and/or orientation of the graphical display device 20 relatively to the industrial equipment 12, the graphical display device 20 may present the model image 30 on the graphical display 22 as seen from a direction and/or a distance which correspond to the direction and/or distance between the graphical display device 22 and the industrial equipment 12. Hence, the user looking at the graphical display 22 will see the model image 30 of the industrial equipment 12 from a position and angle that correspond to his position and orientation in space relatively to the industrial equipment 12.

As the user moves the graphical display device 20 in space, its position and/or orientation relatively to the industrial equipment 12 will change. The tracking unit will track these changes, and the model image 30 can be updated accordingly in real time.

In other embodiments, the model data of the industrial equipment 12 may be pre-stored on the graphical display device 20.

The model image 30 may be shown overlying a real image of the industrial equipment 12 acquired by means of the optical camera 24, but this is optional.

The data that the graphical display device 20 receives via the receiver unit 28 from the sender unit 18 may further comprise control information relating to the industrial equipment 12. For instance, while running the control program the industrial controller unit 16 may receive control information from the industrial equipment 12 via the control network 14 indicating that a component 32 of the industrial equipment 12 may be malfunctioning, and requires maintenance or even replacement. The industrial controller unit 16 may send this control information to the graphical display device 20 via the sender unit 18. The graphical display device 20 may visualize the received control information on the graphical display 22, and may highlight the respective component 32 in the model image 30. This allows the user to easily and quickly identify the component 32 in the industrial equipment 12, and to see to it that the component 32 is repaired or replaced.

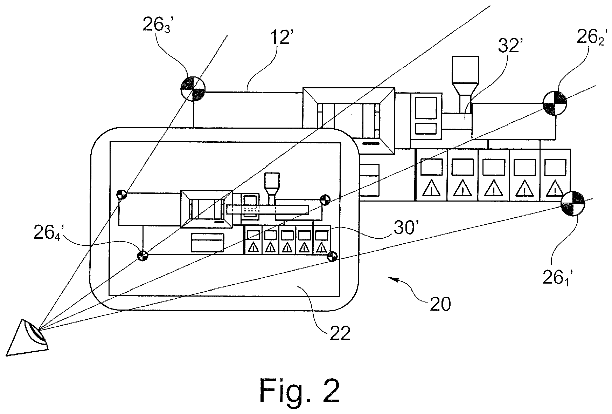

Visualization of the control information will now be described in greater detail with reference to Fig. 2, which illustrates a method for monitoring that is generally similar to the method described above with reference to Fig. 1, but for a different industrial equipment 12'.

In the example of Fig. 2, four markers 26₁' to 26₄' are positioned at the respective corners of the industrial equipment 12', and allow the graphical display device 20 to determine its position and orientation relative to the industrial equipment 12'. Based on the determined position and orientation, the graphical display device 20 illustrates a model image 30' of the industrial equipment 12' on the graphical display 22. As described above with reference to the example of Fig. 1, for the user (represented by the eye symbol in Fig. 2) the model image 30' appears to perfectly match the position and orientation of the graphical display device 20 relatively to the industrial equipment 12'. Based on control information received from the industrial controller unit 16 (not shown in Fig. 2), a malfunctioning component 32' may be highlighted on the model image 30', such as in color.

In the example of Fig. 2, the malfunctioning component 32' is a movable component, and hence its position relative to the frame of the industrial equipment 12' may depend on the operating state of the industrial equipment 12'. The control information that the graphical display device 20 receives from the industrial controller unit 16 may comprise information on the current position of the component 32', based on the current operating state of the industrial equipment 12' as tracked by the industrial controller unit 16. The current position of the component 32' can hence be illustrated in the model image 30', which may further help the user to identify the component 32' that needs replacement on site.

As described above with reference to Figs. 1 or 2, the user looking at the graphical display 22 sees the model image 30, 30' from a position and angle as if he were able to look directly through the graphical display device 20 and onto the industrial equipment 12, 12'.

In order to further enhance this effect and illusion, the user may be advised or instructed to look at the graphical display 22 from a certain distance range or angle range.

In order to further enhance the accuracy of the display, the tracking unit may be adapted to track a position and/or orientation of the user relative to the graphical display 22. For instance, the graphical display device 20 may be equipped with a front-end camera unit 34 that faces the user during operation. The front-end camera unit 34 may track the position and orientation of the eyes of the user, so as to determine the distance of the eyes of the user from a graphical display 22 and an angle under which the user watches the graphical display 22.

The model image 30, 30' may then be displayed on the graphical display 22 in accordance with the relative position and/or orientation of the user's eyes relative to the graphical display 22. As the position and/or orientation of the user's eyes relative to the graphical display change, the position of the model image 30, 30' on the graphical display 22 may change accordingly, so as to increase the spatial precision of the display and ensure a full match of the model image 30, 30' with the underlying image data.

In the embodiments described with reference to Figs. 1 and 2 above, the industrial equipment 12, 12' is a machine in a production line. However, these are just examples, and one skilled in the art will readily understand that the techniques of the present invention are applicable to a broad range of industrial equipments. For instance, in other examples the industrial equipment may be or make comprise a switchboard or control cabinet comprising a large number of cable connections. Control information from an industrial controller unit may indicate that one of the cable connections is broken. The techniques according to the invention allow to highlight the broken cable connection in the model image of the switchboard or control cabinet on the portable graphical display device, which greatly simplifies the user's task of identifying the broken cable connection on site.

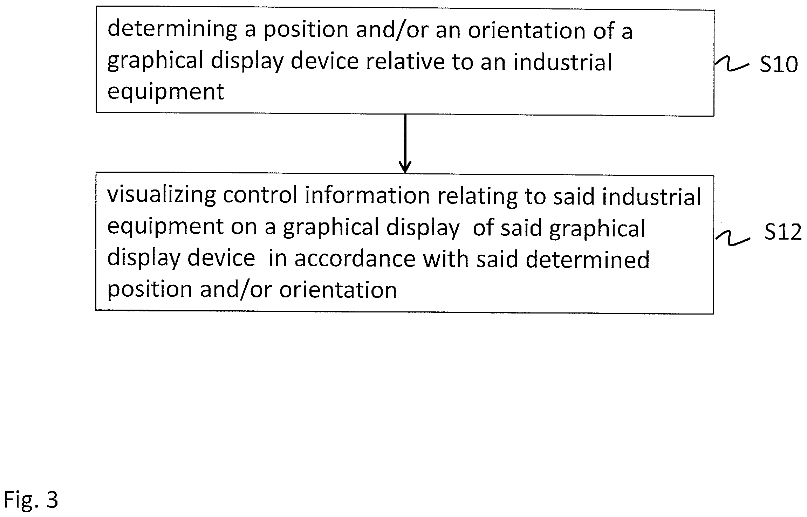

Fig. 3 illustrates a method for monitoring an industrial equipment according to an embodiment.

In a first step S10, a position and/or an orientation of the graphical display device 20 relative to the industrial equipment 12, 12' is determined.

In a second step S12, control information relating to the industrial equipment 12, 12' is visualized on a graphical display 22 of the graphical display device 20 in accordance with said determined position and/or orientation.

The embodiments and the figures described above merely serve as examples to illustrate some advantages achieved with the techniques according to the present invention, but should not be understood to imply any limitation. The scope of the invention is to be determined based on the appended claims.

### Reference Signs

- 10: control environment
- 12, 12': industrial equipment
- 14: control network
- 16: industrial controller unit
- 18: sender unit
- 20: graphical display device
- 22: graphical display of graphical display device 20
- 24: optical camera of graphical display device 20
- 26₁ to 26₆: markers on industrial equipment 12
- 26₁' to 26₄': markers on industrial equipment 12'
- 28: receiver unit of graphical display device 20
- 30, 30': model image of industrial equipment 12, 12' on graphical display 22
- 32, 32': component of industrial equipment 12, 12'
- 34: front-end camera unit of graphical display device 20

## Claims

1. A method for monitoring an industrial equipment (12, 12'), comprising:
determining a position and/or an orientation of a portable graphical display device (20) relative to an industrial equipment (12, 12'); and
visualizing control information relating to said industrial equipment (12, 12') on a graphical display (22) of said graphical display device (20) in accordance with said determined position and/or orientation;
wherein said industrial equipment (12, 12') comprises at least one movable component that can be in a plurality of positions,
**characterized in that** said control information comprises information on a current position of said at least one movable component;
wherein said control information is visualized on said graphical display (22) of said graphical display device (20) based on model data pertaining to said industrial equipment (12, 12'), wherein said model data comprises a two-dimensional or a three-dimensional model of at least part of said industrial equipment (12, 12'); and
wherein said method further comprises a step of displaying said model data pertaining to said industrial equipment (12, 12') on said graphical display (22) in accordance with said determined position and/or orientation, alongside said control information; wherein said model data is displayed on said graphical display (22) as seen from a direction and/or a distance which correspond to said determined position and/or orientation of said graphical display device (20) relative to said industrial equipment (12, 12').

2. The method according to claim 1, comprising:
acquiring an image (30, 30') of said industrial equipment (12, 12') by means of said graphical display device (20); and
visualizing said image (30, 30') together with said control information on said graphical display (22), preferably in real time;
wherein said control information preferably overlies said image (30, 30') of said industrial equipment (12, 12') on said graphical display (22).

3. The method according to any of the preceding claims, further comprising the steps of acquiring an image (30, 30') of said industrial equipment (12, 12') with said graphical display device (20), identifying a plurality of markers (26₁ - 26₆, 26₁' - 26₄') in said image (30, 30'), and determining said position and/or said orientation based on said identified markers (26₁ - 26₆, 26₁' - 26₄').

4. The method according to any of the preceding claims, further comprising the steps of sensing a distance of said graphical display device (20) to said industrial equipment (12, 12'), and determining said position and/or said orientation based on said sensed distance.

5. The method according to any of the preceding claims, wherein said industrial equipment (12, 12') comprises a plurality of components (32, 32'), wherein said control information relates to at least one component (32, 32') among said plurality of components, and wherein said control information is visualized in accordance with a position and/or an orientation of said graphical display device (20) relative to said at least one component (32, 32').

6. The method according to any of the preceding claims, further comprising a step of acquiring said control information from said industrial equipment (12, 12').

7. The method according to any of the preceding claims, wherein said control information comprises information relating to a fault of a component (32, 32') among a plurality of components of said industrial equipment (12, 12'), and visualizing comprises visualizing said component (32, 32').

8. A computer program comprising computer-readable instructions, wherein said instructions, when read on a computer, implement on said computer a method according to any of the preceding claims.

9. A system for monitoring an industrial equipment (12, 12'), comprising:
a tracking unit adapted to determine a position and/or an orientation of a portable graphical display device (20) relative to an industrial equipment (12, 12'); and
a display unit adapted to visualize control information relating to said industrial equipment (12, 12') on a graphical display (22) of said graphical display device (20) in accordance with said determined position and/or orientation;
wherein said industrial equipment (12, 12') comprises at least one movable component that can be in a plurality of positions,
**characterized in that** said control information comprises information on a current position of said at least one movable component
wherein said system is adapted to visualize said control information on said graphical display (22) of said graphical display device (20) based on model data pertaining to said industrial equipment (12, 12'), wherein said model data comprises a two-dimensional or a three-dimensional model of at least part of said industrial equipment (12, 12'); and
wherein said display unit is adapted to display said model data pertaining to said industrial equipment (12, 12') on said graphical display (22) in accordance with said determined position and/or orientation, alongside said control information;
wherein said model data is displayed on said graphical display (22) as seen from a direction and/or a distance which correspond to said determined position and/or orientation of said graphical display device (20) relative to said industrial equipment (12, 12').

10. The system according to claim 9, further comprising an image acquisition unit (24) adapted to acquire an image of said industrial equipment (12, 12').

11. The system according to claim 9 or 10, further comprising a control data acquisition unit adapted to acquire said control information from said industrial equipment (12, 12').

## Patentansprüche

1. Verfahren zum Überwachen einer Industrieausrüstung (12, 12') mit folgenden Schritten:
Bestimmen einer Position und/oder einer Orientierung einer tragbaren grafischen Anzeigevorrichtung (20) relativ zu einer Industrieausrüstung (12, 12'); und
Visualisieren von Steuerungsinformationen, die sich auf die Industrieausrüstung (12, 12') beziehen, auf einer grafischen Anzeige (22) der grafischen Anzeigevorrichtung (20) entsprechend der bestimmten Position und/oder Orientierung;
wobei die Industrieausrüstung (12, 12') wenigstens eine bewegliche Komponente umfasst, die sich in mehreren Positionen befinden kann;
**dadurch gekennzeichnet, dass** die Steuerungsinformationen Informationen bezüglich einer gegenwärtigen Position der wenigstens einen beweglichen Komponente umfassen;
wobei die Steuerungsinformationen auf der grafischen Anzeige (22) der grafischen Anzeigevorrichtung (20) basierend auf Modelldaten, die sich auf die Industrieausrüstung (12, 12') beziehen, dargestellt werden, wobei die Modelldaten ein zweidimensionales oder ein dreidimensionales Modell wenigstens eines Teils der Industrieausrüstung (12, 12') umfassen; und
wobei das Verfahren zudem einen Schritt eines Anzeigens der Modelldaten, die sich auf die Industrieausrüstung (12, 12') beziehen, auf der grafischen Anzeige (22) entsprechend der bestimmten Position und/oder Orientierung zusammen mit den Steuerungsinformationen umfasst; wobei die Modelldaten auf der grafischen Anzeige (22) dargestellt werden wie gesehen aus einer Richtung und/oder einem Abstand, die der bestimmten Position und/oder Orientierung der grafischen Anzeigevorrichtung (20) relativ zu der Industrieausrüstung (12, 12') entsprechen.

2. Verfahren gemäß Anspruch 1, umfassend:
Aufnehmen eines Bildes (30, 30') der Industrieeinrichtung (12, 12') mittels der grafischen Anzeigevorrichtung (20); und
Visualisieren des Bildes (30, 30') zusammen mit den Steuerungsinformationen auf der grafischen Anzeige (22), vorzugsweise in Echtzeit;
wobei die Steuerungsinformationen vorzugsweise dem Bild (30, 30') der Industrieausrüstung (12, 12') auf der grafischen Anzeige (22) überlagert sind.

3. Verfahren gemäß einem der vorangehenden Ansprüche mit zusätzlich den Schritten eines Aufnehmens eines Bildes (30, 30') der Industrieausrüstung (12, 12') mit der grafischen Anzeigevorrichtung (20), eines Identifizierens einer Mehrzahl von Markierungen (26₁ - 26₆, 26₁' - 26₄') in dem Bild (30, 30') und eines Bestimmens der Position und/oder der Orientierung basierend auf den identifizierten Markierungen (26₁ - 26₆, 26₁' - 26₄').

4. Verfahren gemäß einem der vorangehenden Ansprüche mit zusätzlich den Schritten eines Erfassens eines Abstands der grafischen Anzeigevorrichtung (20) von der Industrieausrüstung (12, 12') und eines Bestimmens der Position und/oder der Orientierung basierend auf dem erfassten Abstand.

5. Verfahren gemäß einem der vorangehenden Ansprüche, bei dem die Industrieausrüstung (12, 12') mehrere Komponenten (32, 32') umfasst, wobei die Steuerungsinformationen sich auf wenigstens eine Komponente (32, 32') unter den mehreren Komponenten (32, 32') beziehen und wobei die Steuerungsinformationen entsprechend einer Position und/oder einer Orientierung der grafischen Anzeigevorrichtung (20) relativ zu der wenigstens einen Komponente (32, 32') visualisiert werden.

6. Verfahren gemäß einem der vorangehenden Ansprüche mit zusätzlich einem Schritt eines Gewinnens der Steuerungsinformationen von der Industrieausrüstung (12, 12').

7. Verfahren gemäß einem der vorangehenden Ansprüche, bei welchem die Steuerungsinformationen Informationen hinsichtlich einer Fehlfunktion einer Komponente (32, 32') unter einer Mehrzahl von Komponenten der Industrieausrüstung (12, 12') umfassen und das Visualisieren ein Visualisieren der Komponente (32, 32') umfasst.

8. Rechnerprogramm mit rechnerlesbaren Instruktionen, wobei die rechnerlesbaren Instruktionen, wenn sie von einem Rechner gelesen werden, auf dem Rechner ein Verfahren gemäß einem der vorangehenden Ansprüche implementieren.

9. System zum Überwachen einer Industrieausrüstung (12, 12') mit:
einer Bestimmungseinheit, welche zum Bestimmen einer Position und/oder einer Orientierung einer tragbaren grafischen Anzeigevorrichtung (20) bezüglich einer Industrieausrüstung (12, 12') eingerichtet ist; und
einer Anzeigeeinheit, welche zum Anzeigen von Steuerungsinformationen, die sich auf die Industrieausrüstung (12, 12') beziehen, auf einer grafischen Anzeige (22) der grafischen Anzeigevorrichtung (20) entsprechend der bestimmten Position und/oder Orientierung eingerichtet ist;
wobei die Industrieausrüstung (12, 12') wenigstens eine bewegliche Komponente umfasst, die sich in mehreren Positionen befinden kann;
**dadurch gekennzeichnet, dass** die Steuerungsinformationen Informationen bezüglich einer gegenwärtigen Position der wenigstens einen beweglichen Komponente umfassen;
wobei das System dazu eingerichtet ist, die Steuerungsinformationen auf der grafischen Anzeige (22) der grafischen Anzeigevorrichtung (20) basierend auf Modelldaten, die sich auf die Industrieausrüstung (12, 12') beziehen, zu visualisieren, wobei die Modelldaten ein zweidimensionales oder ein dreidimensionales Modell wenigstens eines Teils der Industrieausrüstung (12, 12') umfassen; und
wobei die Anzeigeeinheit dazu eingerichtet ist, die sich auf die Industrieausrüstung (12, 12') beziehenden Modelldaten auf der grafischen Anzeige (22) gemäß der bestimmten Position und/oder Orientierung zusammen mit den Steuerungsinformationen anzuzeigen; wobei die Modelldaten auf der grafischen Anzeige (22) wie gesehen aus einer Richtung und/oder einer Entfernung, die der bestimmten Position und/oder Orientierung der grafischen Anzeigevorrichtung (20) relativ zu der Industrieausrüstung (12, 12') entsprechen, angezeigt werden.

10. System gemäß Anspruch 9 mit zusätzlich einer Bildaufnahmeeinheit (24), welche zum Aufnehmen eines Bildes der Industrieausrüstung (12, 12') eingerichtet ist.

11. System gemäß Anspruch 9 oder 10 mit zusätzlich einer
Steuerungsdatenaufnahmeeinheit, welche zum Gewinnen der Steuerungsinformationen von der Industrieausrüstung (12, 12') eingerichtet ist.

## Revendications

1. Procédé de surveillance d'un équipement industriel (12, 12'), comprenant les étapes ci-dessous consistant à :
déterminer une position et/ou une orientation d'un dispositif d'affichage graphique portable (20) par rapport à un équipement industriel (12, 12') ; et
visualiser des informations de commande connexes audit équipement industriel (12, 12') sur un affichage graphique (22) dudit dispositif d'affichage graphique (20) conformément à ladite position et/ou à ladite orientation déterminées ;
dans lequel ledit équipement industriel (12, 12') comprend au moins un composant mobile qui peut être dans une pluralité de positions ;
**caractérisé en ce que** lesdites informations de commande comprennent des informations sur une position en cours dudit au moins un composant mobile ;
dans lequel lesdites informations de commande sont visualisées sur ledit affichage graphique (22) dudit dispositif d'affichage graphique (20) sur la base de données de modèle se rapportant audit équipement industriel (12, 12'), dans lequel lesdites données de modèle comprennent un modèle bidimensionnel ou tridimensionnel d'au moins une partie dudit équipement industriel (12, 12') ; et
dans lequel ledit procédé comprend en outre une étape consistant à afficher lesdites données de modèle se rapportant audit équipement industriel (12, 12'), sur ledit dispositif d'affichage graphique (22), conformément à ladite position et/ou à ladite orientation déterminées, conjointement avec lesdites informations de commande ; dans lequel lesdites données de modèle sont affichées sur ledit dispositif d'affichage graphique (22), telles que vues depuis une direction et/ou une distance qui correspondent à ladite position et/ou à ladite orientation déterminées dudit dispositif d'affichage graphique (20) par rapport audit équipement industriel (12, 12').

2. Procédé selon la revendication 1, comprenant les étapes ci-dessous consistant à :
acquérir une image (30, 30') dudit équipement industriel (12, 12') au moyen dudit dispositif d'affichage graphique (20) ; et
visualiser ladite image (30, 30') conjointement avec lesdites informations de commande sur ledit dispositif d'affichage graphique (22), de préférence en temps réel ;
dans lequel lesdites informations de commande recouvrent de préférence ladite image (30, 30') dudit équipement industriel (12, 12') sur ledit affichage graphique (22).

3. Procédé selon l'une quelconque des revendications précédentes, comprenant en outre les étapes consistant à acquérir une image (30, 30') dudit équipement industriel (12, 12') avec ledit dispositif d'affichage graphique (20), à identifier une pluralité de marqueurs (26₁ - 26₆, 26₁' - 26₄') dans ladite image (30, 30'), et à déterminer ladite position et/ou ladite orientation sur la base desdits marqueurs identifiés (26₁ - 26₆, 26₁' - 26₄').

4. Procédé selon l'une quelconque des revendications précédentes, comprenant en outre les étapes consistant à détecter une distance dudit dispositif d'affichage graphique (20) audit équipement industriel (12, 12'), et à déterminer ladite position et/ou ladite orientation sur la base de ladite distance détectée.

5. Procédé selon l'une quelconque des revendications précédentes, dans lequel ledit équipement industriel (12, 12') comprend une pluralité de composants (32, 32'), dans lequel lesdites informations de commande se rapportent à au moins un composant (32, 32') parmi ladite pluralité de composants, et dans lequel lesdites informations de commande sont visualisées conformément à une position et/ou une orientation dudit dispositif d'affichage graphique (20) par rapport audit au moins un composant (32, 32').

6. Procédé selon l'une quelconque des revendications précédentes, comprenant en outre une étape consistant à acquérir lesdites informations de commande auprès dudit équipement industriel (12, 12').

7. Procédé selon l'une quelconque des revendications précédentes, dans lequel lesdites informations de commande comprennent des informations connexes à un défaut d'un composant (32, 32') parmi une pluralité de composants dudit équipement industriel (12, 12'), et l'étape de visualisation consiste à visualiser ledit composant (32, 32').

8. Programme informatique comprenant des instructions lisibles par ordinateur, dans lequel lesdites instructions, lorsqu'elles sont lues sur un ordinateur, mettent en œuvre, sur ledit ordinateur, un procédé selon l'une quelconque des revendications précédentes.

9. Système destiné à surveiller un équipement industriel (12, 12'), comprenant :
une unité de suivi apte à déterminer une position et/ou une orientation d'un dispositif d'affichage graphique portable (20) par rapport à un équipement industriel (12, 12') ; et
une unité d'affichage apte à visualiser des informations de commande connexes audit équipement industriel (12, 12') sur un affichage graphique (22) dudit dispositif d'affichage graphique (20) conformément à ladite position et/ou à ladite orientation déterminées ;
dans lequel ledit équipement industriel (12, 12') comprend au moins un composant mobile qui peut être dans une pluralité de positions ;
**caractérisé en ce que** lesdites informations de commande comprennent des informations sur une position en cours dudit au moins un composant mobile ;
dans lequel ledit système est apte à visualiser lesdites informations de commande sur ledit affichage graphique (22) dudit dispositif d'affichage graphique (20) sur la base de données de modèle se rapportant audit équipement industriel (12, 12'), dans lequel lesdites données de modèle comprennent un modèle bidimensionnel ou tridimensionnel d'au moins une partie dudit équipement industriel (12, 12') ; et
dans lequel ladite étape d'affichage est apte à afficher lesdites données de modèle se rapportant audit équipement industriel (12, 12'), sur ledit dispositif d'affichage graphique (22), conformément à ladite position et/ou à ladite orientation déterminées, conjointement avec lesdites informations de commande ; dans lequel lesdites données de modèle sont affichées sur ledit dispositif d'affichage graphique (22), telles que vues depuis une direction et/ou une distance qui correspondent à ladite position et/ou à ladite orientation déterminées dudit dispositif d'affichage graphique (20) par rapport audit équipement industriel (12, 12').

10. Système selon la revendication 9, comprenant en outre une unité d'acquisition d'image (24) apte à acquérir une image dudit équipement industriel (12, 12').

11. Système selon la revendication 9 ou 10, comprenant en outre une unité d'acquisition de données de commande apte à acquérir lesdites informations de commande auprès dudit équipement industriel (12, 12').
